Europäisches Patentamt

**European Patent Office**

Office européen des brevets

(11) Numéro de publication: **0 236 185**
**B1**

(12) **FASCICULE DE BREVET EUROPEEN**

(45) Date de publication du fascicule du brevet:
**12.04.89**

(21) Numéro de dépôt: **87400205.8**

(22) Date de dépôt: **29.01.87**

(51) Int. Cl.⁴: **B 60 N 1/06**

(54) Dispositif de fixation d'un appui-tête sur un siège de véhicule.

(30) Priorité: **11.02.86 FR 8601845**

(43) Date de publication de la demande:
**09.09.87 Bulletin 87/37**

(45) Mention de la délivrance du brevet:
**12.04.89 Bulletin 89/15**

(84) Etats contractants désignés:
**AT BE CH DE ES GB IT LI LU NL SE**

(56) Documents cités:
**DE-A- 2 426 728**
**GB-A- 2 034 581**
**US-A- 3 512 832**
**US-A- 3 512 833**

(73) Titulaire: **ECIA - EQUIPEMENTS ET COMPOSANTS POUR L'INDUSTRIE AUTOMOBILE, F-25400 Audincourt (FR)**

(72) Inventeur: **Bianchi, Francois, 20, Combe Saint Germain, F-25700 Valentigney (FR)**
Inventeur: **Busa, Denis, 13, rue de Franche Comté, F-25400 - Audincourt (FR)**
Inventeur: **Fourrey, Francois, 32, rue du Petit Chênois, F-25200 Montbéliard (FR)**

(74) Mandataire: **Polus, Camille et al, c/o Cabinet Lavoix 2, Place d'Estienne d'Orves, F-75441 Paris Cedex 09 (FR)**

## Description

Les appuis-tête couramment montés sur les dossiers de siège de véhicule comportent deux tiges de support munies d'encoches ou crans qui peuvent facilement être introduites dans des manchons fixés latéralement sur le tube d'armature du dossier puis être immobilisées en position au moyen d'une épingle, ou analogue, s'engageant d'une part dans une fente du manchon et, d'autre part, dans un cran ou encoche de la tige correspondante. Un tel montage est simple, mais il suppose préalablement la déformation latérale locale du tube d'armature puis le soudage précis du manchon pour que sa fente soit dans une position bien déterminée, ce qui est une opération délicate. En outre, le manchon constitue une saillie sur le tube d'armature et peut par suite être gênant en l'absence d'appui-tête.

Il est par ailleurs connu, par exemple du brevet US-A-3 512 832, un dispositif pour la fixation, sur un siège, d'un appui-tête prolongé par au moins une barre de support munie d'encoches, traversant deux orifices opposés pratiqués coaxialement dans un tube d'armature du siège et comportant un organe de blocage coopérant avec l'une des encoches de la barre.

Toutefois, ces deux orifices ne sont pas destinés à recevoir la barre directement, mais au montage d'un manchon intermédiaire assurant sa réception et son guidage.

Le manchon est ainsi placé à l'intérieur de l'armature du siège et peut être soudé sur le tube sans précision particulière, mais il est encore nécessaire de déformer le tube d'armature et de fixer sur lui le manchon intermédiaire, ce qui complique la fabrication.

La présente invention a pour but de remédier à ces inconvénients en fournissant un dispositif de fixation d'appuis-tête plus simple à réaliser et peu encombrant et qui supprime le manchon de guidage intermédiaire.

Par rapport au dispositif connu, l'invention est caractérisée en ce que le tube d'armature comporte en outre, entre les deux orifices, qui assurent la réception et le guidage de la barre, un trou de passage d'un ergot de blocage porté par un fourreau fendu, recouvrant localement le tube d'armature.

Selon une autre caractéristique, le fourreau fendu est constitué par une portion de cylindre, en matière plastique, de diamètre interne analogue au diamètre externe du tube d'armature et est percé d'un trou central coaxial à l'orifice supérieur du tube d'armature ou orifice d'introduction de la barre de support. Grâce à cette disposition, il n'est plus nécessaire de déformer le tube ni de souder un organe annexe sur lui.

Bien entendu les orifices du tube d'armature peuvent avoir toutes formes appropriées correspondant à celles de la barre de support de l'appui-tête de sorte que l'invention peut permettre aussi bien la fixation d'un appui-tête ayant deux barres cylindriques de support que d'un appui-tête ne comportant qu'une seule barre rectangulaire et plate.

La description ci-dessous d'un mode de réalisation, donné à titre d'exemple non limitatif et représenté aux dessins annexés, fera d'ailleurs ressortir les avantages et caractéristiques de l'invention.

Sur les dessins:
— la fig. 1 est une vue de côté d'un dispositif de fixation selon l'invention monté sur un tube d'armature et traversé par une barre de support d'appui-tête;
— la fig. 2 est une vue en coupe suivant la ligne 2-2 de la fig. 1;
— les fig. 3 et 4 sont des vues en coupe perpendiculaire au tube d'armature du dispositif de fixation de l'invention dans deux phases de montage successives.

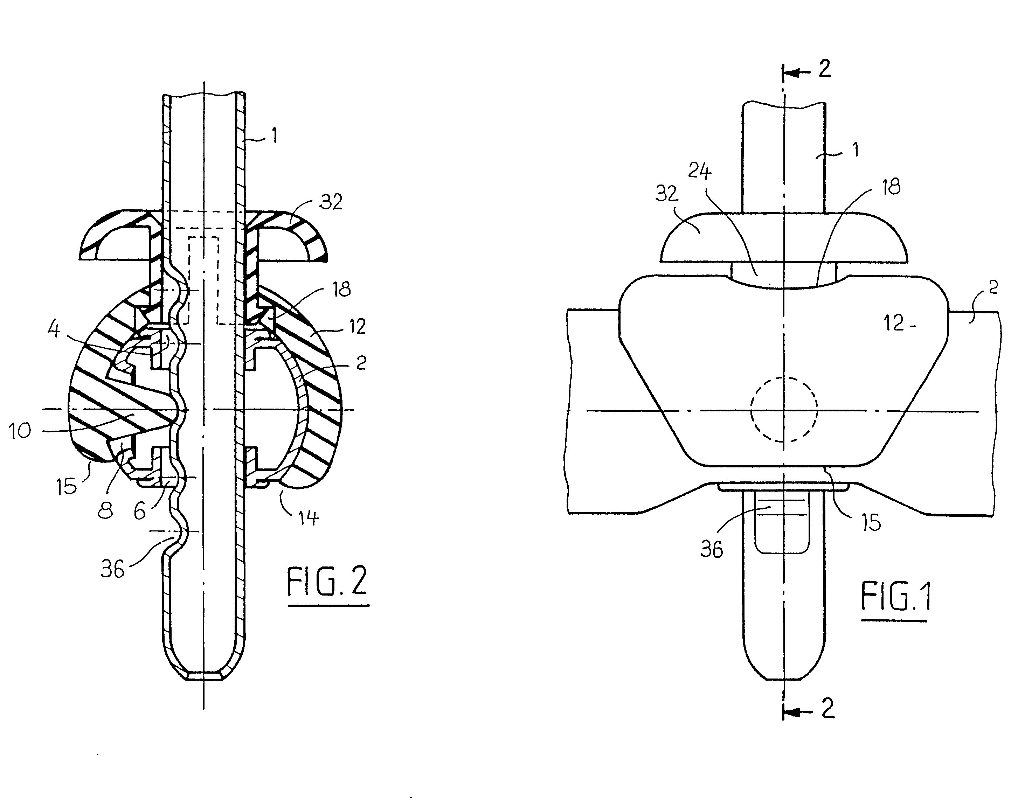

Le dispositif de fixation objet de l'invention est destiné au montage d'un appui-tête sur le dossier d'un siège, ou plus exactement à l'assemblage de la ou de chaque barre de support 1 de cet appui-tête sur le tube supérieur 2 de l'armature du siège ainsi que le montre la fig. 1. Dans ce but le tube 2 est percé de deux orifices diamétralement opposés respectivement 4 et 6 (fig. 2), chacun de ces orifices ayant une forme analogue à celle de la section droite de la barre ou tige 1 qui peut ainsi les traverser successivement. Un troisième orifice 8 est percé dans la paroi du tube 2 entre les deux premiers et est traversé par un ergot 10 porté par la face interne d'un fourreau 12 recouvrant localement le tube 2.

Le fourreau 12 a la forme d'une portion de cylindre dont le diamètre interne est sensiblement le même que celui de la surface externe du tube 2 et recouvre la plus grande partie de cette surface. En effet, les bords longitudinaux 14, 15 de cette portion de cylindre se trouvent de part et d'autre de l'orifice inférieur 6 du tube 2 à une courte distance de cet orifice. A l'opposé de la fente délimitée par ces bords 14 et 15 le fourreau 12 comporte un orifice central 18 dont la forme est exactement semblable à celle de l'orifice supérieur 4 du tube mais qui a une dimension légèrement plus grande. De préférence, comme le montre la fig. 1, le fourreau 12 a une dimension axiale maximale au droit du trou 18 mais cette dimension se réduit progressivement en direction des bords longitudinaux 14 et 15 de la fente. Par suite, l'ergot 10 part d'une partie relativement étroite de ce fourreau 12.

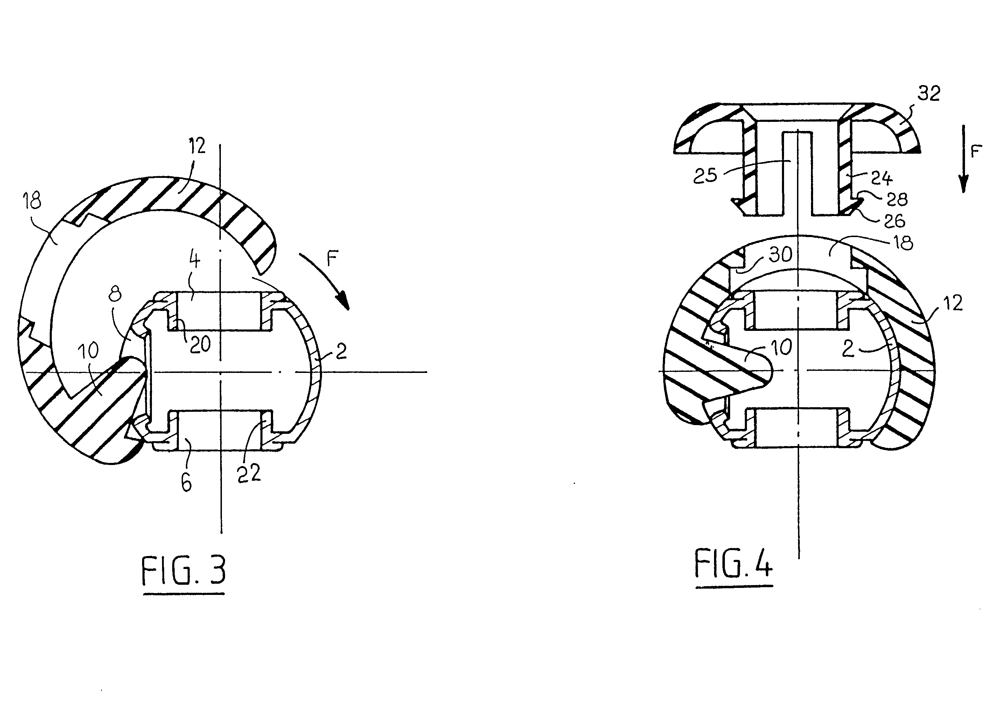

La mise en place du fourreau 12 sur le tube 2 s'effectue donc très simplement par introduction de l'ergot 10 dans le trou 8, puis basculement de l'ensemble du fourreau 12, comme indiqué par la flèche F sur la fig. 3, jusqu'à son complet emboîtement sur le tube 2. L'ergot 10 ayant assuré le centrage, le trou 18 se place automatiquement autour de l'orifice 4 du tube 2, tandis que l'élasticité de la matière qui constitue le fourreau 12 jointe à la forme de ce dernier assure son serrage sur le tube 2.

De préférence, chacun des orifices supérieur et inférieur 4 et 6 du tube 2 est renforcé par un manchon 20, 22 en saillie à l'intérieur de ce tube. Ce manchon peut être rapporté et fixé, par exemple par soudage, dans l'orifice correspondant mais, lorsque la barre de support 1 a une forme cylindrique il est souvent préférable de le réaliser en même temps que l'orifice lui-même par une opération de fluoperçage du tube 2.

Bien entendu, la barre de support 1 de l'appui-tête ou chacune des barres de support, si l'appui-tête est muni de plusieurs barres, comporte au moins une encoche ou un trou de blocage. De préférence, comme représenté sur la fig. 2, la barre 1 comporte une succession d'encoches ou crans 36 susceptibles de recevoir l'ergot 10 du fourreau 12. Lors de la mise en place de l'appui-tête, la barre 1 est en effet enfoncée dans les orifices 4 et 6 du tube 2 jusqu'au moment où l'appui-tête atteint la hauteur désirée et où l'ergot 10 pénètre dans l'encoche 36 correspondante. L'élasticité du fourreau 12 portant l'ergot 10 permet à ce dernier d'être repoussé vers l'extérieur lors du déplacement axial de la tige-support 1 et de s'emboîter automatiquement dans l'encoche correspondante, afin de bloquer l'appui-tête, lorsque ce déplacement s'arrête. Par ailleurs, l'effort normalement exercé sur l'appui-tête tend à consolider ce blocage.

Selon un mode de réalisation préféré, le dispositif comporte en outre une douille de guidage 24 qui est fendue axialement en 25 et terminée à l'une de ses extrémités par une tête conique 6 formant un épaulement extérieur 28 de coopération avec un épaulement intérieur 30 ménagé dans la paroi latérale du trou 18 du fourreau 12 (fig. 4). A son extrémité opposée à la tête 26 la douille 24 comporte une collerette incurvée 32 dont la concavité est tournée vers l'extérieur, qui pince entre elle et le fourreau 12 le rembourrage du dossier (non représenté) et évite ainsi tout contact nuisible entre celui-ci et la barre de support 1.

La fixation est renforcée par la présence de cette douille de guidage 24 qui en coopérant avec la barre de support 1 et avec l'orifice 18 interdit tout basculement accidentel du fourreau 12 par rapport au tube 2, c'est-à-dire toute séparation des organes du dispositif de fixation.

On obtient donc un assemblage sûr de la ou des barres de support d'un appui-tête directement sur le tube d'armature du siège, qui contribue à la fois au guidage et au verrouillage, en n'utilisant qu'un très petit nombre d'éléments faciles à réaliser qui peuvent être rapidement assemblés les uns aux autres et présentent un encombrement faible.

## Revendications

1. Dispositif pour fixation, sur un siège, d'un appui-tête prolongé par au moins une barre de support (1) munie d'encoches (36), traversant deux orifices (4, 6) opposés, pratiqués coaxialement dans un tube (2) d'armature du siège et comportant un organe de blocage (10) coopérant avec l'une des encoches de la barre, caractérisé en ce que le tube d'armature (2) comporte en outre, entre les deux orifices (4, 6), qui assurent la réception et le guidage de la barre (1), un trou (8) de passage d'un ergot de blocage (10) porté par un fourreau fendu (12), recouvrant localement le tube d'armature (2).

2. Dispositif suivant la revendication 1, caractérisé en ce que le fourreau (12) est constitué par une portion de cylindre qui a un diamètre analogue au diamètre externe du tube (2) et est percé d'un trou central (18) coaxial à l'orifice supérieur (4) d'introduction de la barre (1) dans le tube.

3. Dispositif suivant l'une des revendications 1 et 2, caractérisé en ce que les bords (14 et 15) de la fente du fourreau (12) sont situés de part et d'autre de l'orifice inférieur (6) du tube (2).

4. Dispositif suivant l'une des revendications précédentes, caractérisé en ce que le fourreau (12) a une dimension axiale maximale au droit de son trou central (18), cette dimension se réduisant en direction de l'orifice inférieur (6) du tube.

5. Dispositif suivant l'une des revendications précédentes, caractérisé en ce que chacun des trous (4, 6) du tube (2) est renforcé par un manchon (20, 22) en saillie à l'intérieur du tube.

6. Dispositif suivant l'une des revendications précédentes, caractérisé en ce qu'il comporte en outre une douille de guidage fendue (24) montée dans le prolongement des trous diamétralement opposés (4 et 6) du tube et fixée par encliquetage dans l'orifice (18) du fourreau (12).

7. Dispositif suivant la revendication 6, caractérisé en ce que la douille de guidage 26 est terminée à l'extérieur du fourreau (12) par une collerette (32).

8. Dispositif suivant l'une des revendications précédentes, caractérisé en ce que la barre de support (1) de l'appui-tête ayant une section circulaire, les trous supérieur et inférieur (4 et 6) du tube (2) sont formés en même temps que les manchons correspondants (20 et 22) par fluoperçage.

## Claims

1. A device for fixing on a seat a headrest extendibly mounted by at least one support bar (1) provided with grooves (36), passing through two opposed orifices (1, 6) formed coaxially in a tube (2) of the seat framework and comprising a locking member (10) cooperating with one of the grooves in the bar, characterised in that the framework tube (2) also comprises, between the two orifices (4, 6), which receive and guide the bar (1), an opening (8) for the passage of a locking lug (10) carried by a split collar (12) which locally covers the framework tube (2).

2. A device according to claim 1, characterised in that the collar (12) is formed by a portion of a cylinder which has a diameter similar to the outer diameter of the tube (2) and is made with a central opening (18) coaxial with the upper orifice (4) for the introduction of the bar (1) into the tube.

3. A device according to one of claims 1 and 2, characterised in that the edges (14) and (15) of the opening of the collar (12) are located on each side of the lower orifice (6) of the tube (2).

4. A device according to any one of the preceding claims, characterised in that the collar (2) has a maximum axial dimension in the region of its central opening (18), this dimension diminishing toward the lower orifice (6) of the tube.

5. A device according to any one of the preceding claims, characterised in that each of the orifices (4, 6) of the tube (2) is reinforced by a sleeve (20, 22) projecting inside the tube.

6. A device according to any one of the preceding claims, characterised in that it further comprises a split guide socket (24) mounted as an extension of the diametrically opposed orifices (4 and 6) of the tube and secured by clipping into the opening (18) of the collar (12).

7. A device according to claim 6, characterised in that the guide socket (26) terminates in a flange (32) inside the collar (12).

8. A device according to any one of the preceding claims, characterised in that the support bar (1) or the headrest has a circular section and the upper and lower orifices (4 and 6) of the tube (2) are formed at the same time as the corresponding sleeves (20 and 22) by a combined piercing and forming operation.

## Patentansprüche

1. Vorrichtung zum Befestigen einer Kopfstütze auf einem Fahrzeugsitz, die durch wenigstens eine mit Kerben (36) versehene Trägerstange (1) verlängert ist, die zwei Öffnungen (4, 6) durchquert, die einander gegenüberliegend koaxial in einem Sitzarmierungsrohr (2) ausgebildet sind, und ein Blockierungsorgan (10) aufweist, das mit einer der Kerben des Trägers zusammenwirkt, dadurch gekennzeichnet, dass das Armierungsrohr (2) weiterhin zwischen den beiden Öffnungen (4, 6), die die Aufnahme und Führung des Trägers (1) sicherstellen, ein Durchgangsloch (8) eines Blockierungsvorsprungs (10) aufweist, der durch eine geschlitzte Stulpmanschette (12) getragen wird, die lokal das Armierungsrohr (2) bedeckt.

2. Vorrichtung nach Anspruch 1, dadurch gekennzeichnet, dass die Stulpmanschette (12) aus einem zylindrischen Bereich, der einen zu dem Aussendurchmesser des Rohres (2) gleichen Durchmesser aufweist, gebildet ist, und von einer Zentralöffnung (18) durchsetzt ist, die koaxial zur oberen Einführungsöffnung (4) des Trägers (1) in dem Rohr angeordnet ist.

3. Vorrichtung nach einem der Ansprüche 1 oder 2, dadurch gekennzeichnet, dass die Ränder (14 und 15) des Schlitzes der Stulpmanschette (12) zu beiden Seiten der unteren Öffnung (6) des Rohres (2) angeordnet sind.

4. Vorrichtung nach einem der vorhergehenden Ansprüche, dadurch gekennzeichnet, dass die Stulpmanschette (12) eine maximale axiale Abmessung bezüglich ihrer Zentralöffnung (18) aufweist, wobei sich die Abmessung in Richtung auf die untere Öffnung (6) des Rohres verringert.

5. Vorrichtung nach einem der vorhergehenden Ansprüche, dadurch gekennzeichnet, dass jede der Öffnungen (4, 6) des Rohres (2) durch eine Muffe (20, 22) verstärkt ist, die in das Innere des Rohres vorspringt.

6. Vorrichtung nach einem der vorhergehenden Ansprüche, dadurch gekennzeichnet, dass sie weiterhin eine geschlitzte Führungshülse (24) aufweist, die in der Verlängerung der diametral einander gegenüberliegenden Öffnungen (4 und 6) des Rohres angeordnet und durch Verklinkung in der Öffnung (18) der Stulpmanschette (12) festgelegt ist.

7. Vorrichtung nach Anspruch 6, dadurch gekennzeichnet, dass die Führungshülse (24) an der Aussenseite der Stulpmanschette (12) durch einen Kragen (32) beendet ist.

8. Vorrichtung nach einem der vorhergehenden Ansprüche, dadurch gekennzeichnet, dass die Trägerstütze (1) der Kopfstütze einen kreisförmigen Abschnitt aufweist, wobei die oberen und unteren Öffnungen (4 und 6) des Rohres (2) zu gleicher Zeit wie die entsprechenden Muffen (20 und 22) durch Fliessbohren geformt sind.

FIG.2

FIG.1

EP 0 236 185 B1

FIG. 3

FIG. 4

EP 0 236 185 B1